# EUROPEAN PATENT APPLICATION

(11) **EP 4 787 185 A1**
(43) Date of publication of application: **05.08.2026**
(21) Application number: 26153219.6
(22) Date of filing: 21.01.2026
(51) Int. Cl.: G06F 16/583

(54) **IMAGE RETRIEVAL DEVICE, IMAGE RETRIEVAL METHOD, AND PROGRAM**

(30) Priority: 04.02.2025 JP 2025016951
(71) Applicant: NEC Corporation, 108-8001 Tokyo (JP)
(72) Inventor: SHIMAYA, Takuro, Tokyo, 108-8001 (JP)
(74) Representative: Betten & Resch

(57) **Abstract**

Even in a case where a target object in an image has a complicated shape or distribution, a suitable search is performed. An information processing device includes an acquisition unit that acquires a target image and a text for specifying one or more objects in the target image, a first calculation unit that calculates a first feature with reference to the text, a second calculation unit that calculates a second feature for each of the target image and a plurality of reference images with reference to the first feature, and a specification unit that specifies a reference image similar to the target image with reference to a second feature of the target image and a second feature of each of the plurality of reference images.

## Description

### INCORPORATION BY REFERENCE

This application is based upon and claims the benefit of priority from Japanese patent application No. 2025-016951, filed on February 4, 2025, the disclosure of which is incorporated herein in its entirety by reference.

### TECHNICAL FIELD

The present disclosure relates to an image retrieval device, an image retrieval method, and a program.

### BACKGROUND ART

A general-purpose similar image retrieval system has been developed, and has already been applied to fields for medical images such as CT (Computed Tomography) and MRI (Magnetic Resonance Imaging). As an example, JP 2015-191287 A discloses a similar case search device capable of searching for a similar case focusing on the feature of each of a plurality of regions of interest (ROI).

### SUMMARY

In the configuration in which the retrieval target in the image is designated by the region of interest as in JP 2015-191287 A, there is a problem that a suitable search cannot be executed in a case where the target in the image has a complicated shape or distribution.

The present disclosure has been made in view of the above problems, and an example object thereof is to provide a technique capable of performing a suitable search even in a case where a target object in an image has a complicated shape or distribution.

An image retrieval device according to an example aspect of the present disclosure includes an acquisition means for acquiring a target image and a text for specifying one or more objects in the target image, a first calculation means for calculating a first feature with reference to the text, a second calculation means for calculating a second feature for each of the target image and a plurality of reference images with reference to the first feature, and a specification means for specifying a reference image similar to the target image with reference to a second feature of the target image and a second feature of each of the plurality of reference images.

An image retrieval method according to an example aspect of the present disclosure causes one or more processors to execute acquiring a target image and a text for specifying one or more objects in the target image, calculating a first feature with reference to the text, calculating a second feature for each of the target image and a plurality of reference images with reference to the first feature, and specifying a reference image similar to the target image with reference to a second feature of the target image and a second feature of each of the plurality of reference images.

A program according to an example aspect of the present disclosure is a program for causing a computer to function as an information processing device, the program causing the computer to function as an acquisition means for acquiring a target image and a text for specifying one or more objects in the target image, a first calculation means for calculating a first feature with reference to the text, a second calculation means for calculating a second feature for each of the target image and a plurality of reference images with reference to the first feature, and a specification means for specifying a reference image similar to the target image with reference to a second feature of the target image and a second feature of each of the plurality of reference images.

According to an exemplary aspect of the present disclosure, there is an exemplary effect that a suitable search can be performed even in a case where a target object in an image has a complicated shape or distribution.

### BRIEF DESCRIPTION OF DRAWINGS

The above and other aspects, features and advantages of the present disclosure will become more apparent from the following description of certain exemplary embodiments when taken in conjunction with the accompanying drawings, in which:
Fig. 1 is a block diagram illustrating a configuration of an information processing device according to the present disclosure;
Fig. 2 is a flowchart illustrating a flow of an information processing method according to the present disclosure;
Fig. 3 is a block diagram illustrating a configuration of an information processing system according to the present disclosure;
Fig. 4 is a diagram for explaining an outline of processing by the information processing system according to the present disclosure;
Fig. 5 is a flowchart illustrating an example of a processing flow in the information processing system according to the present disclosure;
Fig. 6 is a diagram for explaining a processing example in the information processing system according to the present disclosure;
Fig. 7 is a diagram for explaining a display example in the information processing system according to the present disclosure;
Fig. 8 is a block diagram illustrating a configuration of the information processing system according to the present disclosure;
Fig. 9 is a flowchart illustrating an example of a processing flow in the information processing system according to the present disclosure;
Fig. 10 is a diagram for explaining a display example in the information processing system according to the present disclosure;
Fig. 11 is a block diagram illustrating a configuration of the information processing system according to the present disclosure;
Fig. 12 is a flowchart illustrating an example of a processing flow in the information processing system according to the present disclosure;
Fig. 13 is a diagram for explaining a processing example in the information processing system according to the present disclosure; and
Fig. 14 is a block diagram illustrating a configuration of a computer that functions as an information processing device according to the present disclosure.

### EXAMPLE EMBODIMENTS

Hereinafter, example embodiments of the present disclosure will be exemplified. However, the present disclosure is not limited to the following example embodiments, and various modifications may be made within the scope described in the claims. For example, example embodiments obtained by appropriately combining techniques (some or all of objects or methods) adopted in the following example embodiments may also fall within the scope of the present disclosure. Example embodiments obtained by appropriately omitting some of the techniques adopted in the following example embodiments may also fall within the scope of the present disclosure. Effects mentioned in the following example embodiments are examples of effects expected in the example embodiments, and do not define extension of the present disclosure. That is, example embodiments that do not exert the effects mentioned in the following example embodiments may also fall within the scope of the present disclosure.

### [First Example Embodiment]

A first example embodiment that is an example embodiment of the present disclosure will be described in detail with reference to the drawings. The present example embodiment is a basic form of each of the example embodiments described later. An application range of each technology adopted in the present example embodiment is not limited to the present example embodiment. That is, each technology adopted in the present example embodiment can also be adopted in another example embodiment included in the present disclosure within a range in which no particular technical problem occurs. Each technology illustrated in the drawings referred to for describing the present example embodiment can also be adopted in another example embodiment included in the present disclosure within a range in which no particular technical problem occurs.

### (Configuration of Information Processing device 1)

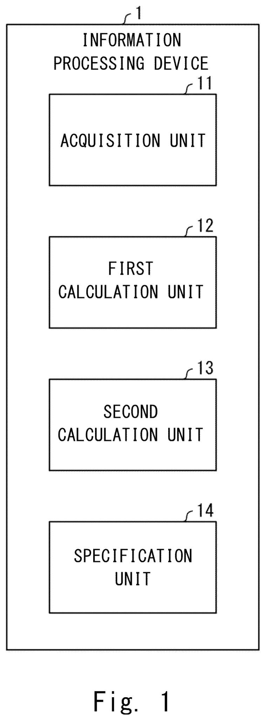

A configuration of an information processing device 1 according to the present example embodiment will be described with reference to Fig. 1. Since the information processing device 1 can be used to search for an image as an example, the information processing device 1 may be referred to as an image retrieval device 1. Fig. 1 is a block diagram illustrating a configuration of the information processing device 1. As illustrated in Fig. 1, the information processing device 1 includes an acquisition unit 11, a first calculation unit 12, a second calculation unit 13, and a specification unit 14.

### (Acquisition Unit 11)

The acquisition unit 11 acquires a target image. Here, the target image may be a set of a plurality of data points (pixels as an example), and a specific example thereof is not particularly limited. As an example, the target image may be an image captured by an electromagnetic wave in any wavelength region from an X-ray to an infrared ray, an image (ultrasound image) obtained by imaging a result of ultrasonic inspection, or another image. The target image is not limited to a two-dimensional image, and may include arrangement of three-dimensional or more data points. As an example, a three-dimensional image configured (reconstructed) based on computed tomography (CT) or magnetic resonance imaging (MRI) may be used, or three-dimensional point cloud data acquired by a light detection and ranging (LiDAR) device may be used. The target image is not limited to a still image, and may be a moving image including a plurality of frames. The acquisition unit 11 may acquire the target image from an inspection device or the like including an imaging unit.

The acquisition unit 11 acquires a text for specifying one or more objects (target objects) in the target image. Here, the "text for specifying an object" may include, as an example, a text for specifying at least one of names and modes (examples: shape, arrangement, distribution, size, number, color, movement, etc.) of one or more objects included in the target image. As a more specific example, in a case where the target image is a medical image such as CT or MRI, the "text for specifying an object" may include a symptom name or a lesion name (for example, calcification, cysts, granular shadows, etc.) indicated by the object. However, these examples do not limit the present example embodiment. The wording "text for specifying an object" may be expressed as, for example, "text related to an object". The text acquired by the acquisition unit 11 for a certain target image may be singular or plural. The text itself or words included in the text may be expressed as keywords.

The acquisition source of the text by the acquisition unit 11 is not limited to the present example embodiment, but as an example, the text may be input by the user of the information processing device 1, or may be acquired from a management device or the like existing as a part of the information processing device 1 or as a separate body from the information processing device 1. As an example, in a case where the target image is a medical image such as CT or MRI, the acquisition unit 11 may be configured to acquire the text from an electronic medical record associated with the target image in a management device (for example, an electronic medical record management device) that manages the target image.

### (First Calculation Unit 12)

The first calculation unit 12 calculates a first feature with reference to the text acquired by the acquisition unit 11. As an example, the first calculation unit 12 acquires a first feature (first feature vector) relevant to the text by embedding the text acquired by the acquisition unit 11 in a feature space. In a case where the acquisition unit 11 acquires a plurality of texts, the first calculation unit 12 calculates the first feature for each text.

### (Second Calculation Unit 13)

The second calculation unit 13 refers to the first feature calculated by the first calculation unit 12 to calculate a second feature for each of the target image and the plurality of reference images. As an example, the second calculation unit 13 performs processing such as:
· calculating a second feature of the target image with reference to the first feature calculated by the first calculation unit 12; and
· calculating a second feature for each of the plurality of reference images (reference image 1, reference image 2,...) with reference to the first feature calculated by the first calculation unit 12. Here, as an example, the plurality of reference images are images to be compared with the target image. For example, in a case where the target image is a medical image such as CT or MRI, the plurality of reference images may be acquired from one or more electronic medical records different from the electronic medical record associated with the target image in a management device (for example, an electronic medical record management device) that manages the target image.

Specific processing by the first calculation unit 12 and the second calculation unit 13 does not limit the present example embodiment, but as an example the following configuration may be adopted in which
· the first calculation unit 12 is configured to execute: calculating the first feature by vectorizing the text in a feature space; and
· the second calculation unit 13 is configured to execute:
   calculating an image feature of each of the target image and the plurality of reference images by vectorizing each of the target image and the plurality of reference images in the same feature space as the certain feature space; and
   calculating the second feature for each of the target image and the plurality of reference images by using similarity between the first feature and the image feature.

### (Specification Unit 14)

The specification unit 14 specifies a reference image similar to the target image with reference to the second feature of the target image and the second feature of each of the plurality of reference images calculated by the second calculation unit 13.

As an example, the specification unit 14 may be configured to calculate similarity between the second feature of the target image and the second feature of each of the plurality of reference images, and specify a reference image similar to the target image using the calculated similarity.

### (Effects of Information Processing device 1)

As described above, the information processing device 1 may adopt the configuration as follows:
· acquiring a target image and a text for specifying one or more objects in the target image;
· calculating a first feature with reference to the text;
· calculating a second feature for each of the target image and the plurality of reference images with reference to the first feature; and
· specifying a reference image similar to the target image with reference to a second feature of the target image and a second feature of each of the plurality of reference images. As described above, in the information processing device 1, the reference image similar to the target image is specified by using the first feature calculated from the text for specifying one or more objects in the target image. Therefore, even in a case where a target object (object) in the target image has a complicated shape or distribution, a suitable search can be performed.

### (Flow of Information Processing Method S1)

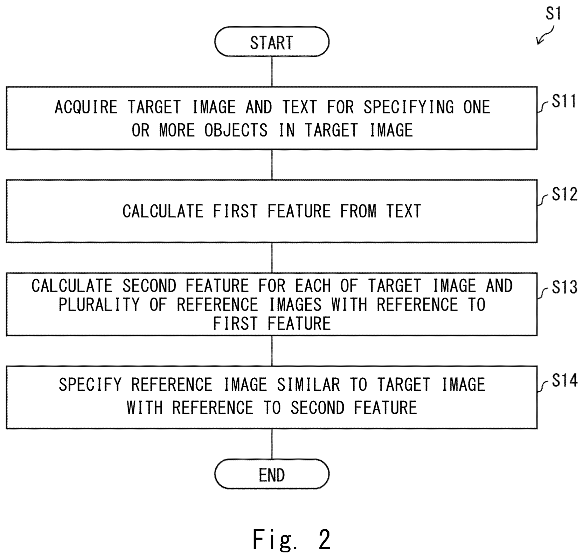

Subsequently, a flow of an information processing method S1 according to the present example embodiment will be described with reference to Fig. 2.

Since an information processing method S1 can be used to search for an image as an example, the information processing method S1 may be referred to as an image retrieval method S1. Fig. 2 is a flowchart illustrating the flow of the information processing method S1. As illustrated in Fig. 2, the information processing method S1 includes a step (process) S11 of acquiring a target image and a text, a step (process) S12 of calculating a first feature from the text, a step (process) S13 of calculating a second feature, and a step (process) S14 of specifying a reference image similar to the target image with reference to the second feature.

### (Step S11)

In step S11, the acquisition unit 11 acquires a target image and a text for specifying one or more objects (target objects) in the target image. Since a more specific description of the acquisition unit 11 has been described above, the description thereof will be omitted here.

### (Step S12)

In step S12, the first calculation unit 12 calculates the first feature with reference to the text acquired by the acquisition unit 11. Since a more specific description of the first calculation unit 12 has been described above, the description thereof will be omitted here.

### (Step S13)

In step S13, the second calculation unit 13 calculates a second feature for each of the target image and the plurality of reference images with reference to the first feature calculated by the first calculation unit 12 in step S12. Since a more specific description of the second calculation unit 13 has been described above, the description thereof will be omitted here.

### (Step S14)

In step S14, the specification unit 14 specifies a reference image similar to the target image with reference to the second feature of the target image and the second feature of each of the plurality of reference images calculated by the second calculation unit 13 in step S13. Since the more specific description of the specification unit 14 has been described above, the description thereof will be omitted here.

### (Effects of Information Processing Method S1)

As described above, the information processing method S1 includes:
· acquiring a target image and a text for specifying one or more objects in the target image;
· calculating a first feature with reference to the text;
· calculating a second feature for each of the target image and the plurality of reference images with reference to the first feature; and
· specifying a reference image similar to the target image with reference to a second feature of the target image and a second feature of each of the plurality of reference images. According to the above configuration, an effect is provided similar to that of the information processing device 1.

### [Second Example Embodiment]

A second example embodiment that is an example embodiment of the present disclosure will be described in detail with reference to the drawings. Components having the same functions as the components described in the example embodiment described above are denoted by the same reference numerals, and descriptions thereof will be omitted as appropriate. An application range of each technology adopted in the present example embodiment is not limited to the present example embodiment. That is, each technology adopted in the present example embodiment can also be adopted in another example embodiment included in the present disclosure within a range in which no particular technical problem occurs. Each technique illustrated in each of the drawings referred to for describing the present example embodiment can be adopted in the other example embodiments included in the present disclosure within a range in which no particular technical problem occurs.

### (Configuration of Information Processing System 100A)

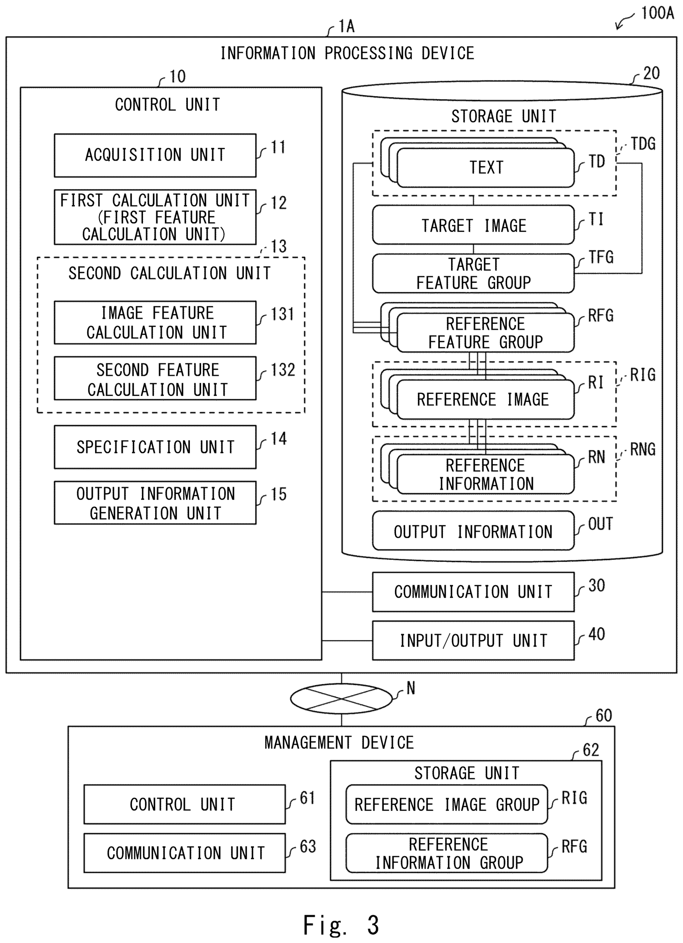

A configuration of an information processing system 100A according to the present example embodiment will be described with reference to Fig. 3. Fig. 3 is a block diagram illustrating the configuration of the information processing system 100A. As illustrated in Fig. 3, the information processing system 100A includes an information processing device 1A and a management device 60 connected to the information processing device 1A via a network N. Here, as a specific configuration of the network N, without limiting the present example embodiment, as an example, it is possible to use a wireless Local Area Network (LAN), a wired LAN, a Wide Area Network (WAN), a public line network, a mobile data communication network, or a combination of these networks.

### (Management Device 60)

The management device 60 manages a reference image group RIG including a plurality of reference images and a reference information group RNG including reference information associated with the images. As an example, in a case where the management device 60 is implemented as a medical record management device, the management device 60 manages electronic medical records of a plurality of patients. The electronic medical record of each patient includes medical images (CT image, MRI image, etc.) and medical information of the patient. These medical images and medical information are examples of reference images and medical information to be referred to by the information processing device 1A described later.

The management device 60 may be implemented as a management system including a first management device that manages the reference image group RIG including the plurality of reference images and a second management device that manages the reference information group RNG including the reference information associated with the images.

As illustrated in Fig. 3, the management device 60 includes a control unit 61, a storage unit 62, and a communication unit 63. The communication unit 63 communicates with a device outside the management device 60. For example, the communication unit 63 communicates with the information processing device 1A provided in the information processing system 100A. The communication unit 63 transmits data supplied from the control unit 61 to the information processing device 1A, and supplies data received from the information processing device 1A to the control unit 61. The data provided by the communication unit 63 to the information processing device 1A may include the above-described reference image, medical information, data of another electronic medical record, or the like.

The storage unit 62 stores the reference image group RIG and the reference information group RNG described above. As an example, the control unit 61 provides one or more reference images RI and one or more pieces of reference information RN included in the reference image group RIG and the reference information group RNG to the information processing device 1A via the communication unit 63 based on a request from the information processing device 1A. The control unit 61 may also provide other data included in the electronic medical record to the information processing device 1A.

Although the management device 60 is exemplified as a device separate from the information processing device 1A in the present example embodiment, this does not limit the present example embodiment. The function of the control unit 61 included in the management device 60 may be included in the control unit of the information processing device 1A. Similarly, the storage unit of the information processing device 1A may store the reference image group RIG, the reference information group RNG, or other data included in the electronic medical record stored in the storage unit 62 included in the management device 60.

### (Configuration of Information Processing Device 1A)

Next, a configuration of the information processing device 1A according to the present example embodiment will be described with reference to Fig. 3. Since the information processing device 1A can be used to search for an image as an example, the information processing device 1A may be referred to as an image retrieval device 1A. As illustrated in Fig. 3, the information processing device 1A includes a control unit 10, a storage unit 20, a communication unit 30, and an input/output unit 40.

### (Communication Unit 30)

The communication unit 30 communicates with a device outside the information processing device 1A. As an example, the communication unit 30 communicates with the management device 60. The communication unit 30 transmits data supplied from the control unit 10 to the management device 60, and supplies data received from the management device 60 to the control unit 10. The data received by the communication unit 30 from the management device 60 may include electronic medical records of a plurality of patients. These electronic medical records may include one or more reference images RI and one or more pieces of reference information RN described above.

### (Input/Output Unit 40)

The input/output unit 40 includes at least one of input/output devices such as a keyboard, mouse, a display, a printer, and a touch panel. Alternatively, the input/output unit 40 may be connected to an input/output device such as a keyboard, a mouse, a display, a printer, or a touch panel. This configuration allows the input/output unit 40 to receive inputs of various types of information to the information processing device 1A from the connected input equipment. The input/output unit 40 also outputs various types of information to the connected output equipment under control of the control unit 10. Examples of the input/output unit 40 include an interface such as, for example, a Universal Serial Bus (USB).

### (Storage Unit 20)

The storage unit 20 stores various types of data to be referred to by the control unit 10 and various types of data generated by the control unit 10. As an example, the storage unit 20 stores:
· target image TI;
· text group TDG;
· target feature group TFG;
· reference image group RIG;
· reference information group RNG;
· reference feature group RFG; and
· output information OUT. Here, similarly to the first example embodiment, the target image TI may be a set of a plurality of data points (pixels as an example), and a specific example thereof is not particularly limited. As an example, the target image TI may be an image captured by an electromagnetic wave in any wavelength region from an X-ray to an infrared ray, an image (ultrasound image) obtained by imaging a result of ultrasonic inspection, or another image. The target image TI is not limited to a two-dimensional image, and may include arrangement of three-dimensional or more data points. As an example, a three-dimensional image configured (reconstructed) based on computed tomography (CT) or magnetic resonance imaging (MRI) may be used, or three-dimensional point cloud data acquired by a light detection and ranging (LiDAR) device may be used. The target image TI is not limited to a still image, and may be a moving image including a plurality of frames. The target image TI may be acquired from an inspection device or the like including an imaging unit, or may be acquired from an electronic medical record of the subject (target patient) in the management device 60 described above.

The text group TDG includes one or more texts TD (also referred to as text data TD) related to the target image TI. As an example, one or more texts TD specifying one or more objects included in the target image TI are included. As a more specific example, the text group TDG may include a text TD specifying at least one of a name and a mode (examples: shape, arrangement, distribution, size, number, color, movement, etc.) of one or more objects included in the target image TI. For example, in a case where the target image is a medical image such as CT or MRI, each text TD may include a symptom name or a lesion name (for example, calcification, cysts, granular shadows, etc.) indicated by the object. However, these examples do not limit the present example embodiment. The text itself or words included in the text may be expressed as keywords.

The acquisition source of the text group TDG is not limited to the present example embodiment, but may be input by the user of the information processing device 1A or may be acquired from the management device 60 described above as an example. As an example, in a case where the target image is a medical image such as CT or MRI, the text group TDG may be acquired from an electronic medical record associated with the target image TI in the management device 60.

The target feature group TFG includes one or more features (feature vectors) related to the target image TI. As an example, the target feature group TFG includes:
· the feature (first feature) of each of one or more texts TD included in the text group TDG related to the target image TI;
· the image feature of the target image TI; and
· the second feature related to the target image TI. Specific examples of such features will be described later.

The reference feature group RFG includes one or more features (feature vectors) related to one or more reference images RI. As an example, the reference feature group RFG includes, as a feature related to a certain reference image RI:
· the image feature of the reference image RI; and
· the second feature related to the reference image RI. Specific examples of such features will be described later.

The reference information group RNG includes reference information RN associated with each of one or more reference images RI. As an example, in a case where the reference image RI is a medical image such as CT or MRI, the reference information RN may include medical information associated with the reference image RI. Specific examples of the reference information RN will be described later.

The output information OUT is information generated by an output information generation unit 15 described later. Specific examples of the output information OUT will be described later.

### (Control Unit 10)

As illustrated in Fig. 3, the control unit 10 includes the acquisition unit 11, the first calculation unit 12, the second calculation unit 13, the specification unit 14, and the output information generation unit 15.

### (Outline of Processing by Control Unit 10)

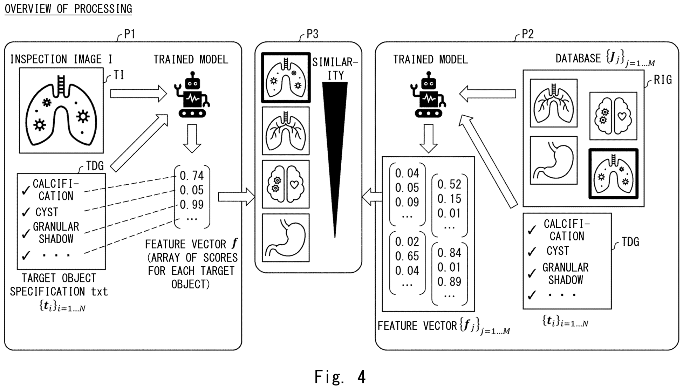

Prior to detailed description of each unit included in the control unit 10, an outline of processing performed by the control unit 10 will be described with reference to Fig. 4. The process according to this example includes processes P1 to P3 illustrated in Fig. 4.

### (Process P1)

In process P1, the target image TI (also referred to as an inspection image I in Fig. 4) and the text {tᵢ}_{i=1 to N} (here, N is the total number of texts) related to the target image TI are acquired. Then, a feature vector f related to the target image TI is generated (calculated) from the target image TI and the text {tᵢ}_{i=1 to N} using the machine-learned model. Here, the text {tᵢ}_{i=1 to N} is an example of the above-described text group TDG. In Fig. 4, the above text {tᵢ}_{i=1 to N} is also referred to as "target object designation txt". The feature vector f is an example of a second feature related to the target image TI described later.

In the example illustrated in Fig. 4, a score indicating the relevance between each text included in the text group TDG and the target image TI is used as a component of the feature vector f. In other words, the feature vector f is obtained by an array of scores of each target object (each object) in the target image TI relevant to each text. For example, in the example illustrated in Fig. 4,
· a score 0.74 indicating the relevance between the text "calcification" and the target image TI (the score of the object relevant to "calcification" in the target image TI) is included as a first component of the feature vector f,
· a score 0.05 indicating the relevance between the text "cyst" and the target image TI (the score of the object relevant to "cyst" in the target image TI) is included as a second component of the feature vector f, and
· a score 0.99 indicating the relevance between the text "granular shadow" and the target image TI (the score of the object relevant to the "granular shadow" in the target image TI) is included as a third component of the feature vector f.

### (Process P2)

On the other hand, in process P2, the reference image group RIG (also referred to as {Jⱼ}_{j=1 to M} (here, M is the total number of reference images Jⱼ) in Fig. 4) including the plurality of reference images RI and the text {tᵢ}_{i=1 to N} related to the target image TI are acquired. Then, feature vectors {fⱼ}_{j=1 to M} regarding the reference images are generated (calculated) from the reference images {Jⱼ}_{j=1 to M} and the text {tᵢ}_{i=1 to N} using the machine-learned model.

### (Process P3)

Then, in process P3, the similarity between the feature vector f and the feature vector fⱼ is calculated, and as an example, the reference images {Jⱼ}_{j=1 to M} are sorted and output (displayed) in descending order of the similarity. Here, cosine similarity or the like can be used as the similarity between the feature vector f and the feature vector fⱼ.

Since the control unit 10 can receive any text as an input by performing such processing, it is possible to specify a target object having a complicated shape and distribution. As an example, as compared with a configuration in which a region of interest (ROI) is received in the form of a closed curve, even in a case where the target object having a complicated shape or distribution is included in a target image, image retrieval can be suitably performed.

### (Acquisition Unit 11)

Returning to Fig. 3, each unit included in the control unit 10 will be specifically described. The acquisition unit 11 acquires a target image TI and a text for specifying one or more objects (target objects) in the target image TI. Since the target image TI and the text acquired by the acquisition unit 11 have been described above, redundant description will be omitted.

### (First Calculation Unit 12)

The first calculation unit 12 calculates a first feature (also referred to as a first feature vector) with reference to the text acquired by the acquisition unit 11. As an example, similarly to the first example embodiment, the first calculation unit 12 acquires the first feature (first feature vector) relevant to the text by embedding the text acquired by the acquisition unit 11 in the feature space. In a case where the acquisition unit 11 acquires a plurality of texts, the first calculation unit 12 calculates the first feature for each text. Since the first calculation unit 12 is configured to calculate the first feature in this manner, the first calculation unit 12 may be referred to as a first feature calculation unit 12. The calculation of the first feature by the first calculation unit 12 can be performed using a machine-learned model as an example.

### (Second Calculation Unit 13)

The second calculation unit 13 calculates a second feature (also referred to as a second feature vector) for each of the target image and the plurality of reference images with reference to the first feature calculated by the first calculation unit 12. More specifically, the second calculation unit 13 performs processing such as:
· calculating a second feature of the target image TI with reference to the first feature calculated by the first calculation unit 12; and
· calculating a second feature for each of the plurality of reference images RI with reference to the first feature calculated by the first calculation unit 12. As an example, as illustrated in Fig. 3, the second calculation unit 13 includes an image feature calculation unit 131 and a second feature calculation unit 132.

### (Image Feature Calculation unit 131)

The image feature calculation unit 131 vectorizes each of the target image TI and the plurality of reference images RI in the feature space to calculate an image feature (also referred to as an image feature vector) for each of the target image TI and the plurality of reference images RI. Here, the feature space in which each of the target image TI and the plurality of reference images RI is embedded as a vector is the same space as the feature space in which the text is embedded by the first calculation unit 12.

### (Second Feature Calculation Unit 132)

The second feature calculation unit 132 calculates the second feature for each of the target image TI and the plurality of reference images RI using the similarity between the first feature and the image feature. More specifically, the second feature calculation unit 132 performs processing such as:
· calculating a similarity between the first feature and an image feature of the target image TI; and
· calculating, as a second feature related to the target image TI, a vector including the similarity as a component. The second feature calculation unit 132 performs processing such as:
   · calculating a similarity between the first feature and an image feature of the reference image RI; and
   · calculating, as a second feature related to the reference image RI, a vector including the similarity as a component. As described above, the second feature calculated by the second feature calculation unit 132 is, for example, a vector including a similarity between the first feature and the image feature as a component. The above-described calculation of each feature by the second calculation unit 13 can be performed using a machine-learned model as an example. More specific processing by the first calculation unit 12 and the second calculation unit 13 will be described later.

### (Specification Unit 14)

The specification unit 14 specifies a reference image RI similar to the target image TI with reference to the second feature of the target image TI and the second feature of each of the plurality of reference images RI calculated by the second calculation unit 13.

As an example, the specification unit 14 may be configured to calculate similarity between the second feature of the target image TI and the second feature of each of the plurality of reference images RI, and specify a reference image RI similar to the target image TI using the calculated similarity. Here, the cosine similarity may be used as the similarity.

### (Output Information Generation Unit 15)

The output information generation unit 15 generates the output information OUT including the information derived (specified) by the first calculation unit 12, the second calculation unit 13, and the specification unit 14. As an example, the output information generation unit 15 generates the output information OUT including the reference image RI similar to the target image TI and the reference information RN associated with the reference image RI. As an example, the output information OUT generated by the output information generation unit 15 is presented to the user via the input/output unit 40. Specific examples of the output information OUT will be described later.

### (Flow of Processing by Information Processing Device 1A)

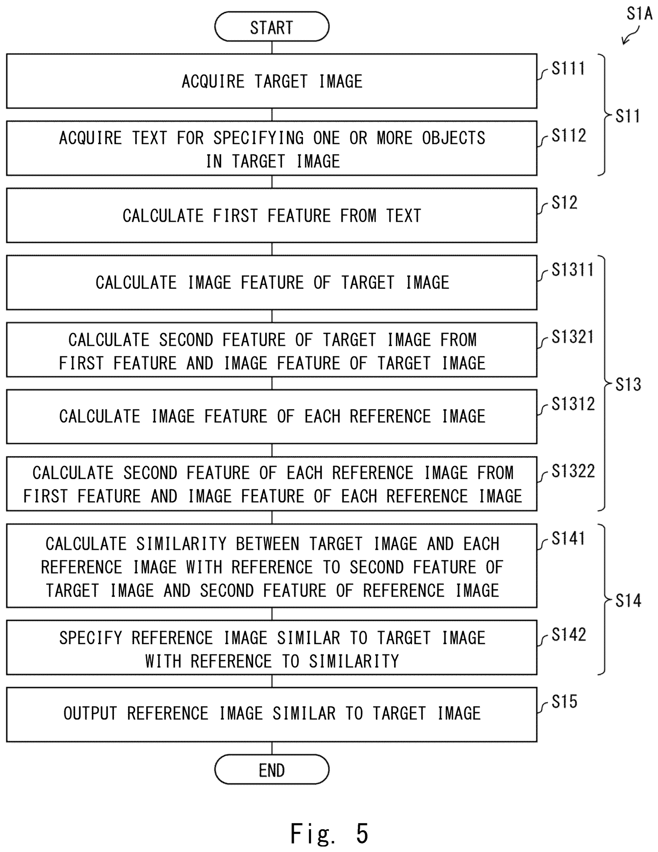

Next, an example of a processing flow by the information processing device 1A will be described with reference to Fig. 5.

Fig. 5 is a flowchart illustrating an example A of a processing flow executed by the information processing device 1A.

### (Steps S111 and S112)

First, in step S111, the acquisition unit 11 acquires a target image TI. In step S112, a text for specifying one or more objects (target objects) in the target image TI is acquired.

### (Step S12)

Subsequently, in step S12, the first calculation unit 12 calculates a first feature from the text acquired in step S112.

### (Step S1311)

On the other hand, in step S1311, the image feature calculation unit 131 calculates the image feature for the target image TI by vectorizing the target image TI in the feature space.

### (Step S1321)

Then, in step S1321, the second feature calculation unit 132 calculates the second feature for the target image TI using the similarity between the first feature and the image feature of the target image TI.

### (Step S1312)

On the other hand, in step S1312, the image feature calculation unit 131 vectorizes each of the plurality of reference images RI in the feature space to calculate the image feature of each of the plurality of reference images RI.

### (Step S1322)

Then, in step S1322, the second feature calculation unit 132 calculates the second feature for each of the plurality of reference images RI using the similarity between the first feature and the image feature for each of the plurality of reference images RI.

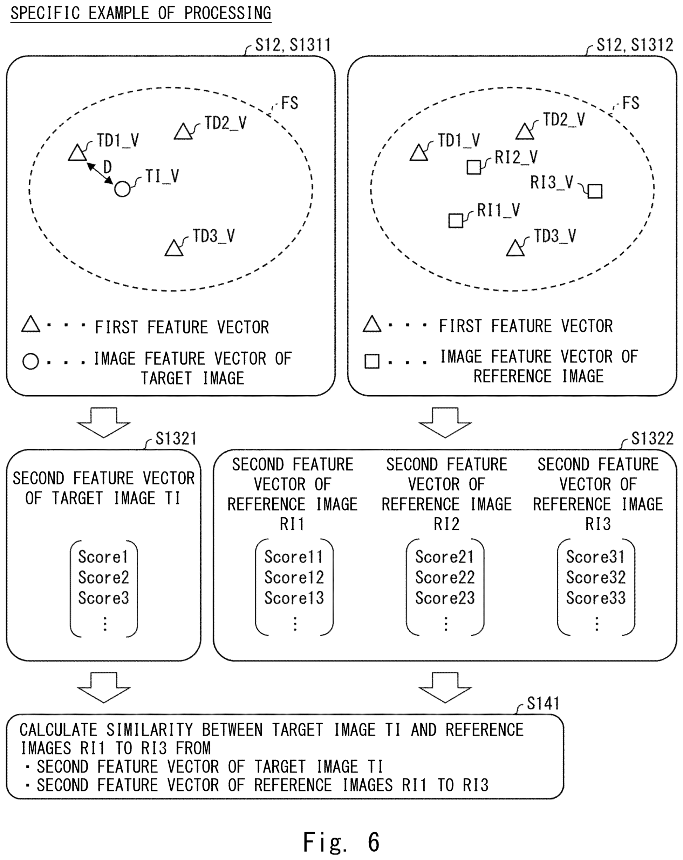

Fig. 6 illustrates a specific example of processing in steps S12, S1311, S1312, S1321, and S1322. In the example illustrated in Fig. 6, in step S112, texts TD1 to TD3 are acquired as texts for specifying one or more objects in the target image TI, and RI1 to RI3 are present as the reference image RI.

As illustrated in the upper left part of Fig. 6, in step S12, the first calculation unit 12 generates (calculates) the first feature vectors TD1_V to TD3_V relevant to the texts TD1 to TD3 in the predetermined feature space FS. In step S1311, the image feature calculation unit 131 generates (calculates) the image feature vector TI_V relevant to the target image TI in the predetermined feature space FS.

On the other hand, as illustrated in the upper right part of Fig. 6, in step S1312, the image feature calculation unit 131 generates (calculates) the image feature vectors RI1_V to RI3_V relevant to the reference images RI1 to RI3 in the predetermined feature space FS.

Then, as illustrated in the middle left part of Fig. 6, in step S1321, the second feature calculation unit 132 generates the second feature vector related to the target image TI. In the example illustrated in Fig. 6, the second feature calculation unit 132 generates a vector, as the second feature vector related to the target image TI, including the following scores as components:
· a score Score1 indicating a similarity between the image feature vector TI_V of the target image TI and the first feature vector TD1_V of the text TD1;
· a score Score2 indicating a similarity between the image feature vector TI_V of the target image TI and the first feature vector TD2_V of the text TD2; and
· a score Score3 indicating a similarity between the image feature vector TI_V of the target image TI and the first feature vector TD3_V of the text TD3.

On the other hand, as illustrated on the right middle part of Fig. 6, in step S1322, the second feature calculation unit 132 generates the second feature vector related to each of the reference images RI1 to RI3. In the example illustrated in Fig. 6, the second feature calculation unit 132 generates a vector, as the second feature vector regarding the reference image RI1, including the following scores as components:
· a score Score11 indicating a similarity between the image feature vector RI1_V of the reference image RI1 and the first feature vector TD1_V of the text TD1;
· a score Score12 indicating a similarity between the image feature vector RI1_V of the reference image RI1 and the first feature vector TD2_V of the text TD2; and
· a score Score13 indicating a similarity between the image feature vector RI1 _V of the reference image RI1 and the first feature vector TD3_V of text TD3. The same applies to other reference images.

As the similarity, for example, a similarity according to a distance between feature vectors can be used. For example, as the score Score1 indicating the similarity between the image feature vector TI_V of the target image TI and the first feature vector TD1_V of the text TD1, the similarity according to the distance D illustrated in Fig. 6 can be used. More specifically, the cosine similarity may be used as the similarity. However, these examples do not limit the present processing example.

### (Steps S141 and S142)

Returning to Fig. 5, in step S141, the specification unit 14 calculates similarity between the second feature of the target image TI and the second feature of each of the plurality of reference images RI. As an example, the specification unit 14 calculates:
· a similarity between the second feature vector of the target image TI and the second feature vector of the reference image RI1;
· a similarity between the second feature vector of the target image TI and the second feature vector of the reference image RI2; and
· a similarity between the second feature vector of the target image TI and the second feature vector of the reference image RI3. Then, in step S142, the reference image RI having the highest similarity is specified as the reference image RI most similar to the target image TI. As a similarity, for example, the similarity according to a distance between feature vectors can be used as the similarity. More specifically, the cosine similarity can be used. However, these examples do not limit the present processing example.

### (Step S15)

In step S15, the output information OUT is generated with reference to the result of the processing in the above step. As an example, the output information generation unit 15 generates the output information OUT including the reference image RI similar to the target image TI and the reference information RN associated with the reference image RI. Then, the output information generation unit 15 visually presents the output information OUT to the user via the display of the input/output unit 40.

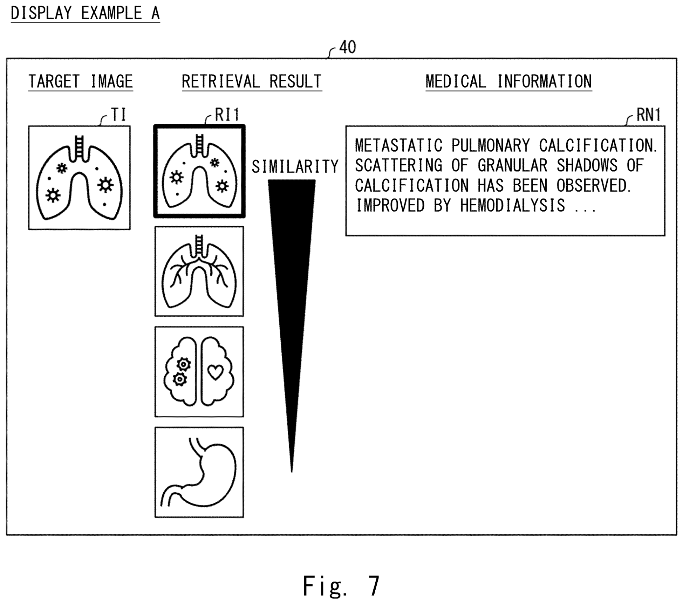

Fig. 7 illustrates a specific example of the output information OUT generated by the output information generation unit 15 and visually presented to the user. In the example illustrated in Fig. 7, the output information OUT includes:
· a target image TI;
· a plurality of reference images similar to the target image TI (arranged in descending order of similarity); and
· reference information RN1 (examination information in Fig. 7) associated with the reference image RI1 most similar to the target image TI. Here, the reference information RN1 includes information (medical information) that supports decision making by a medical worker such as a doctor who is a user of the information processing device 1A.

The output information generation unit 15 may generate advice information to the user with reference to the result of the processing by the above step, and include the generated advice information in the output information OUT. As an example, in a case where the reference information RN1 indicates that a certain symptom is improved by a certain treatment, execution of the treatment may be generated as advice information to a medical worker such as a doctor and included in the output information OUT. As described above, according to the information processing device 1A, it is possible to suitably support decision making by a medical worker such as a doctor.

### (Effects of Information Processing device 1A)

As described above, the information processing device 1A may adopt the configuration as follows:
· acquiring a target image TI and a text for specifying one or more objects in the target image TI;
· calculating a first feature with reference to the text;
· calculating a second feature for each of the target image TI and the plurality of reference images RI with reference to the first feature; and
· specifying a reference image RI similar to the target image TI with reference to a second feature of the target image TI and a second feature of each of the plurality of reference images RI. As described above, in the information processing device 1A, the reference image RI similar to the target image TI is specified by using the first feature calculated from the text for specifying one or more objects in the target image TI. Therefore, even in a case where a target object (object) in the target image TI has a complicated shape or distribution, a suitable search can be performed.

In the information processing device 1A, the feature space in which each of the target image TI and the plurality of reference images RI is embedded as a vector is the same space as the feature space in which the text is embedded (both are the feature space FS described above) by the first calculation unit 12. As a result, it is possible to suitably estimate the similarity between the text and the target image TI and the reference image RI, and thus, it is possible to search for an image that suitably reflects the shape and distribution of the object in the target image TI. In other words, even in a case where the object in the target image TI has a complicated shape or distribution, the object can be suitably specified by the text and used for the search.

As described above, according to the information processing device 1A, as an example, there is an exemplary effect that it is possible to more suitably execute the search for the image reflecting the shape and distribution of the object in the target image TI as compared with a configuration in which the text is not subjected to the feature conversion or a configuration in which the text and the image are subjected to the feature conversion in different feature spaces.

### [Third Example Embodiment]

A third example embodiment that is an example of the example embodiment of the present disclosure will be described in detail with reference to the drawings. Components having the same functions as the components described in the example embodiment described above are denoted by the same reference numerals, and descriptions thereof will be omitted as appropriate. An application range of each technology adopted in the present example embodiment is not limited to the present example embodiment. That is, each technology adopted in the present example embodiment can also be adopted in another example embodiment included in the present disclosure within a range in which no particular technical problem occurs. Each technique illustrated in each of the drawings referred to for describing the present example embodiment can be adopted in the other example embodiments included in the present disclosure within a range in which no particular technical problem occurs.

### (Configuration of Information Processing System 100B)

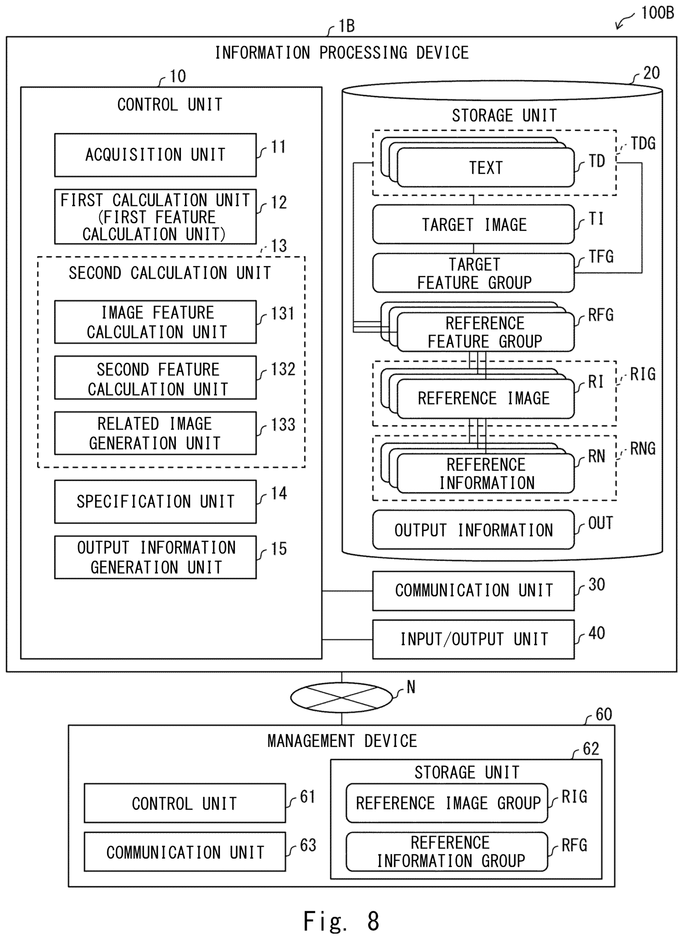

A configuration of an information processing system 100B according to the present example embodiment will be described with reference to Fig. 8. Fig. 8 is a block diagram illustrating the configuration of the information processing system 100B. As illustrated in Fig. 8, the information processing system 100B includes an information processing device (image retrieval device) 1B, a management device 60 connected to the information processing device 1B via a network N. The management device 60 is similar to that of the second example embodiment, and redundant description is omitted since they have already been described.

### (Information Processing Device 1B)

As illustrated in Fig. 8, the information processing device 1B includes a related image generation unit 133 in the second calculation unit 13 in addition to each configuration included in the information processing device 1A according to the second example embodiment.

Hereinafter, differences from the second example embodiment will be mainly described, and redundant description will be omitted.

### (Related Image Generation Unit 133)

The related image generation unit 133 generates a related image which is related to at least any one of:
· the target image TI acquired by the acquisition unit 11; and
· the reference image RI similar to the target image TI and specified by the specification unit 14, and
in which a region related to the text acquired by the acquisition unit 11 is emphasized using the machine-learned model.

Here, the related image generation unit 133 may generate the related image in the form of a heat map, or may generate a related image in which an area related to the text is indicated by a rectangle. The process of generating a specific related image by the related image generation unit 133 is not limited to the present example embodiment, but may be configured to use the Grad-CAM algorithm for each text as an example. In other words, as the machine-learned model, a machine-learned model that can execute the Grad-CAM algorithm can be used.

### (Output Information Generation Unit 15)

The output information generation unit 15 according to the present example embodiment generates the output information OUT including at least one of the target image TI and the reference image RI similar to the target image TI, and the related image. The generated output information OUT is presented to the user via the display included in the input/output unit 40 as an example, similarly to the first example embodiment.

The output information generation unit 15 according to the present example embodiment may be configured to receive an instruction to select a text (keyword) from the user via the input/output unit 40 and selectively present only the heat map related to the text indicated by the selection instruction. As an example, in a case where the text acquired by the acquisition unit 11 is calcification, cyst, and granular shadow, and the user designates "calcification", the output information generation unit 15 may be configured to display only the heat map related to calcification from among:
· a heat map associated with calcification;
· a heat map associated with the cysts; and
· a heat map associated with granular shadow
which are generated by the output information generation unit 15.

### (Flow of Processing by Information Processing Device 1B)

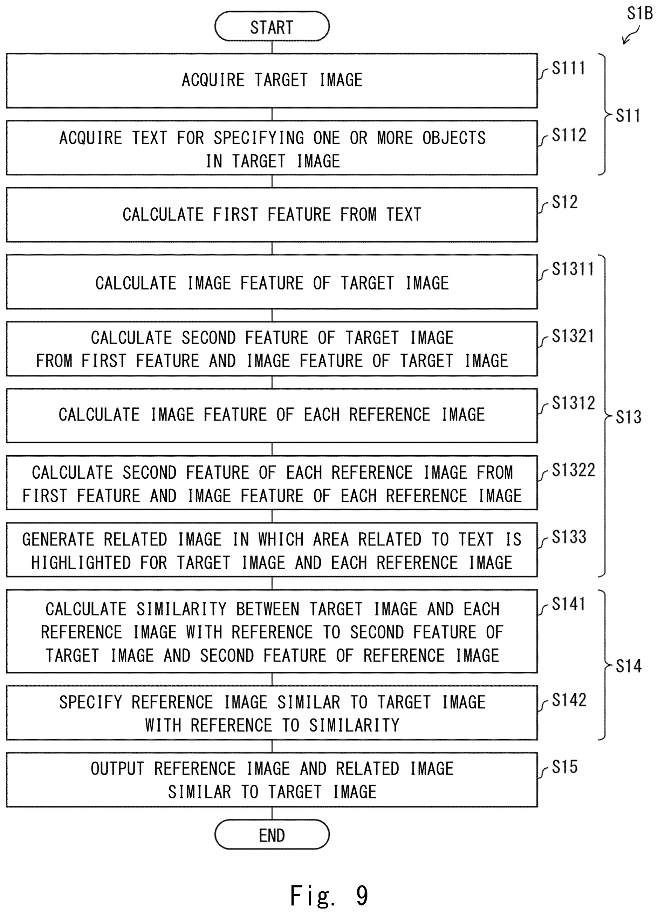

Next, an example of a processing flow by the information processing device 1B will be described with reference to Fig. 9. Fig. 9 is a flowchart illustrating an example B of a processing flow executed by the information processing device 1B. As illustrated in Fig. 9, the example B is substantially similar to the example A of the processing flow by the information processing device 1A illustrated in Fig. 5, but is different in that step S133 is included. Hereinafter, differences from the example A of the processing flow by the information processing device 1A will be mainly described, and redundant description will be omitted.

### (Step S133)

In step S133, the related image generation unit 133 generates a related image which is related to the following images:
· the target image TI acquired by the acquisition unit 11 in step S112; and
· each reference image RI to be processed in step S1312,
in which a region related to the text acquired by the acquisition unit 11 is emphasized using a machine-learned model. Since specific processing performed by the related image generation unit 133 has been described above, the description thereof will be omitted here.

### (Step S15)

In step S15, the output information generation unit 15 generates the output information OUT including at least one of the target image TI and the reference image RI similar to the target image TI, and the related image.

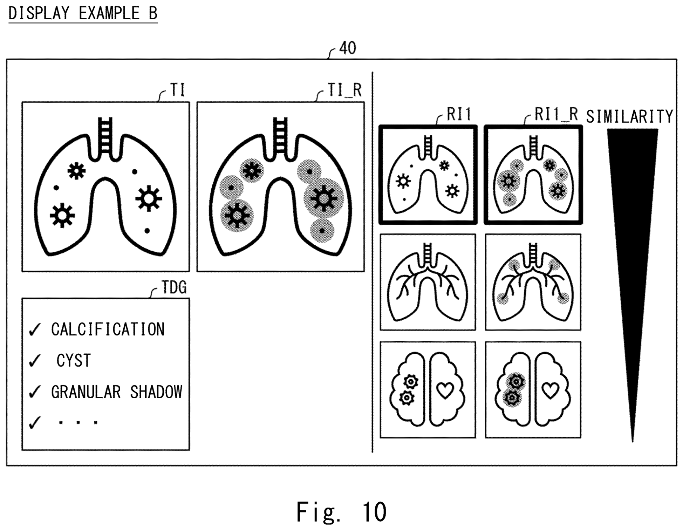

Fig. 10 illustrates a display example of the output information OUT generated by the output information generation unit 15 in step S15. In the example illustrated in Fig. 10,
· the target image TI,
· the related image TI_R of the target image generated by the related image generation unit 133,
· the reference image RI1 most similar to the target image TI and specified by the specification unit 14,
· the related image RI_R of the reference image RI1 generated by the related image generation unit 133, and
· other reference images and related images relevant thereto (arranged in descending order of similarity) are included in the output information OUT.

### (Effects of Information Processing Device 1B)

As described above, since the information processing device 1B includes the related image generation unit 133, the determination basis of similarity can be suitably presented to the user. Therefore, according to the information processing device 1B, there is an effect that the explanatory property to the user is improved. According to the information processing device 1B, since the user can visually confirm whether determination of similarity by the information processing device 1B is appropriate, usability is improved. Therefore, according to the information processing device 1B, in addition to the effects described in the first example embodiment, there is also an effect that it is possible to more suitably support decision making of a medical worker such as a doctor.

### [Fourth Example Embodiment]

A fourth example embodiment, which is an example of the example embodiments of the present disclosure, will be described in detail with reference to the drawings. Components having the same functions as the components described in the example embodiment described above are denoted by the same reference numerals, and descriptions thereof will be omitted as appropriate. An application range of each technology adopted in the present example embodiment is not limited to the present example embodiment. That is, each technology adopted in the present example embodiment can also be adopted in another example embodiment included in the present disclosure within a range in which no particular technical problem occurs. Each technique illustrated in each of the drawings referred to for describing the present example embodiment can be adopted in the other example embodiments included in the present disclosure within a range in which no particular technical problem occurs.

### (Configuration of Information Processing System 100C)

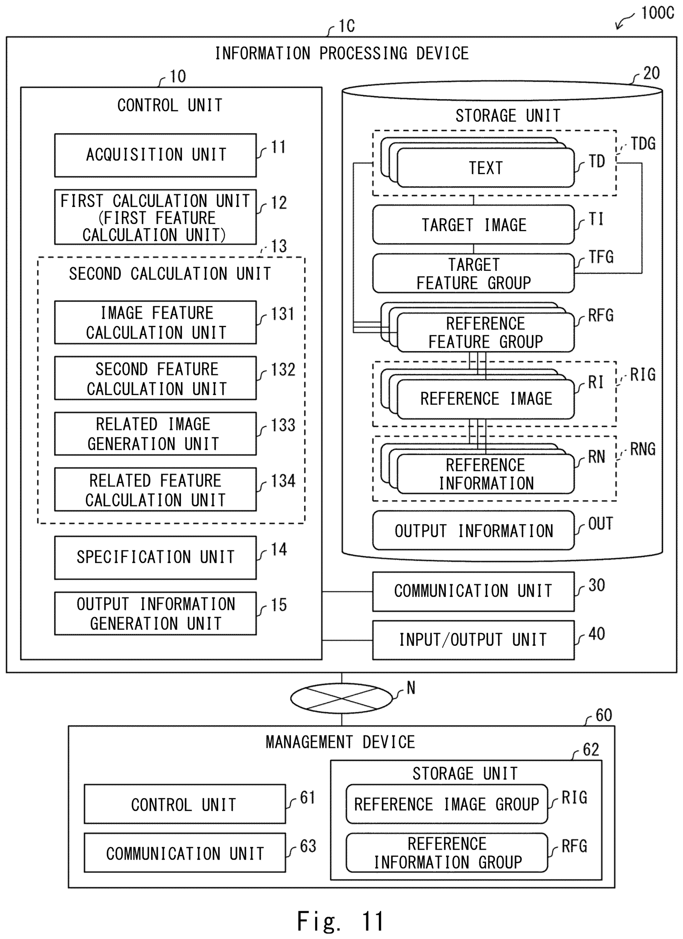

A configuration of an information processing system 100C according to the present example embodiment will be described with reference to Fig. 11. Fig. 11 is a block diagram illustrating a configuration of the information processing system 100C. As illustrated in Fig. 11, the information processing system 100C includes an information processing device (image retrieval device) 1C, a management device 60 connected to the information processing device 1C via a network N. The management device 60 is similar to that of the second example embodiment, and redundant description is omitted since they have already been described.

### (Information Processing Device 1C)

As illustrated in Fig. 11, the information processing device 1C includes a related feature calculation unit 134 in the second calculation unit 13 in addition to each configuration included in the information processing device 1B according to the third example embodiment. Hereinafter, differences from the third example embodiment will be mainly described, and redundant description will be omitted.

### (Related Feature Calculation Unit 134)

The related feature calculation unit 134 performs processing such as:
· calculating the related feature related to the target image TI from the related image TI_R of the target image TI; and
· calculating related feature related to each of the plurality of reference images RI from related images RI_R of each of the plurality of reference images RI.

### (Specification Unit 14)

The specification unit 14 according to the present example embodiment specifies the reference image RI similar to the target image TI with reference to:
· the second feature of the target image TI calculated by the second calculation unit 13;
· the related feature of the target image TI calculated by the related feature calculation unit 134;
· the second feature of each of the plurality of reference images RI calculated by the second calculation unit 13; and
· the related feature of each of the plurality of reference images RI calculated by the related feature calculation unit 134.

### (Flow of Processing by Information Processing Device 1C)

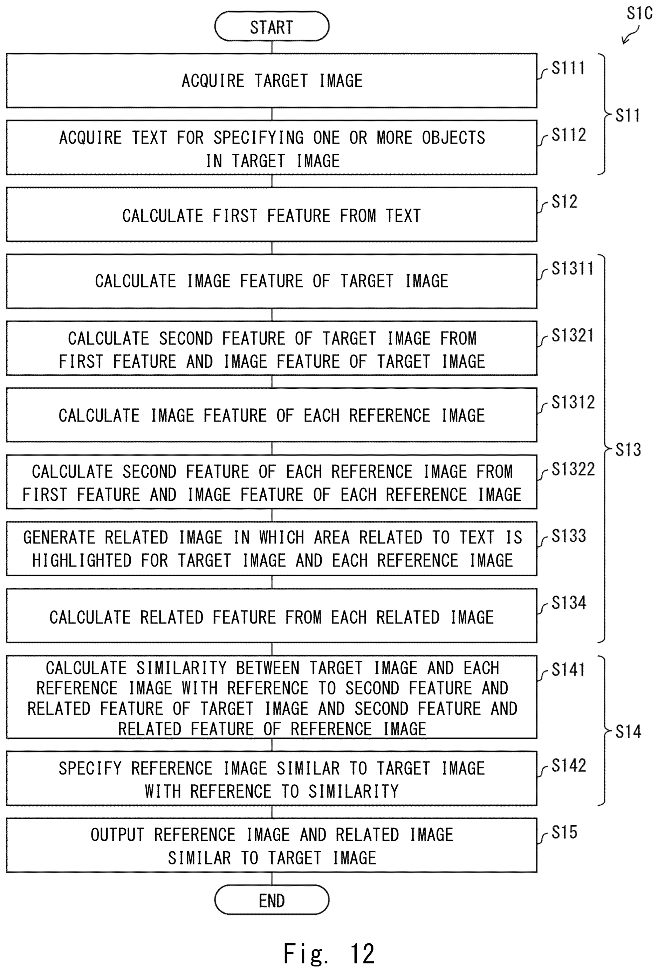

Next, an example of a processing flow by the information processing device 1C will be described with reference to Fig. 12. Fig. 12 is a flowchart illustrating an example C of a processing flow executed by the information processing device 1C. As illustrated in Fig. 12, the example C is substantially similar to the example B of the processing flow by the information processing device 1B illustrated in Fig. 9, but is different in that step S134 is included. Hereinafter, differences from the example B of the processing flow by the information processing device 1B will be mainly described, and redundant description will be omitted.

### (Step S134)

In step S134, the related feature calculation unit 134 performs processing such as:
· calculating the related feature related to the target image TI from the related image TI_R of the target image TI generated by the related image generation unit 133 in step S133; and
· calculating the related feature related to each of the plurality of reference images RI from the related image RI_R of each of the plurality of reference images RI generated by the related image generation unit 133 in step S133.

### (Step S141)

Then, in step S141, the specification unit 14 specifies the reference image RI similar to the target image TI with reference to:
· the second feature of the target image TI calculated by the second calculation unit 13 in step S1321;
· the related feature of the target image TI calculated by the related feature calculation unit 134 in step S134;
· the second feature of each of the plurality of reference images RI calculated by the second calculation unit 13 in step S1322; and
· the related feature of each of the plurality of reference images RI calculated by the related feature calculation unit 134 in step S134.

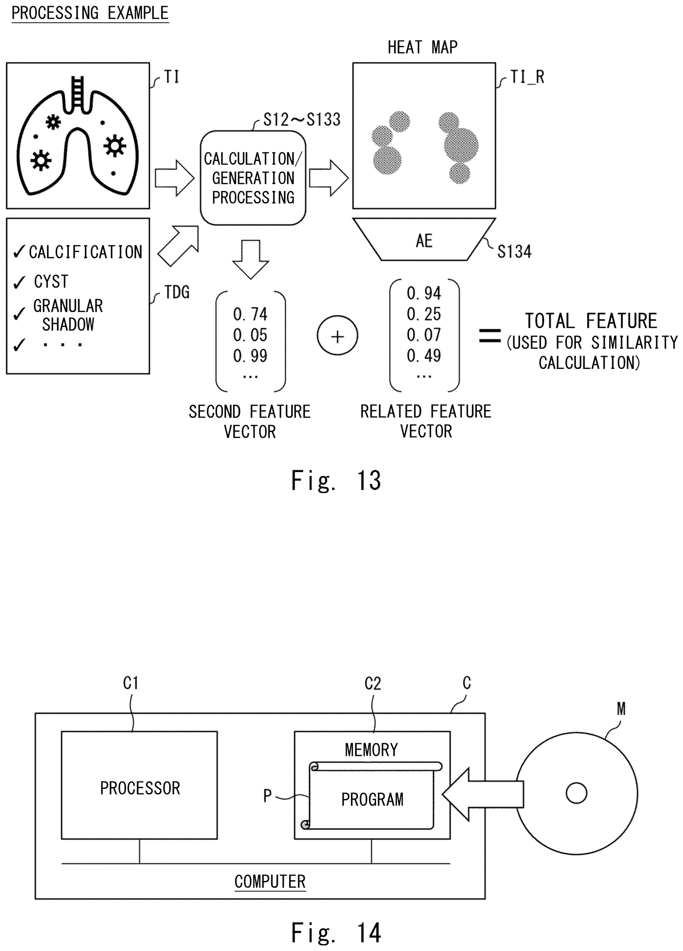

Fig. 13 is a diagram schematically illustrating a processing example according to the present example embodiment. As illustrated in Fig. 13, with reference to the target image TI and the text group TDG related to the target image TI, the processes of steps S12 to S133 described above are executed. Then, by these processes, the second feature (second feature vector) related to the target image TI is calculated. A related image (heat map) TI_R related to the target image TI is generated by these processes.

Then, in step S134 described above, the related feature calculation unit 134 generates the related feature (related feature vector) from the heat map. Here, in the example of Fig. 13, a case where the related feature calculation unit 134 uses an auto encoder AE in the viewpoint feature generation processing is taken as an example, but the example does not limit the present example embodiment, and a feature extractor other than the auto encoder AE may be used.

Then, in the similarity determination processing between the target image TI and the reference image described above, the specification unit 14 refers to:
· the second feature (second feature vector) related to the target image TI; and
· the related feature (related feature vector) related to the related image (heat map) TI_R of the target image TI. As an example, the specification unit 14 combines the second feature vector and the related feature vector into one vector, and performs the similarity determination processing with reference to the combined vector.

In Fig. 13, the related feature vector related to the reference image RI is not illustrated, but as described above, the related feature (related feature vector) is generated also for the reference image RI, and is referred to in the similarity determination processing.

### (Effects of Information Processing Device 1C)

As described above, the information processing device 1C includes the related feature calculation unit 134, and the specification unit 14 specifies the reference image RI similar to the target image TI by also referring to the related feature related to the target image TI and the related feature related to each of the plurality of reference images RI. Therefore, even in a case where the target object in the target image TI has a complicated shape or distribution, more suitable similarity determination can be performed. More specifically, as an example, the similarity can be calculated in consideration of the difference in the spatial distribution of the object in each of the target image TI and the reference image TI.

### (Supplementary Information regarding Each Example Embodiment)

In each of the above-described example embodiments, the acquisition unit 11 may be configured to acquire a text (keyword) designated by a user such as a doctor via the input/output unit 40 as the text related to the target image TI, or may be configured to directly use a keyword list registered on the information processing devices A to C in advance as the text.

The text may be a phrase or a sentence. As an example, it may be a form such as "diffuse calcification" or "tumor infiltrates lymph nodes". In such a configuration, the acquisition unit 11, the first calculation unit 12, and the second calculation unit 13 may characterize the phrase or sentence itself, or may characterize the keyword extracted from the phrase or sentence.

Although partially described above, in each of the above-described example embodiments, in a case where the output information OUT is displayed, in addition to the target image TI and the reference image RI, past medical information (such as a treatment summary and an interpretation report) related to at least one of these images may be displayed together.

In each of the example embodiments described above, as a component of the second feature vector,
· a score obtained by an inner product or the like of the first feature vector of the text and the image feature vector may be used, or
· (each component of) a difference vector between the first feature vector of the text and the image feature vector may be used.

### (Application Examples of Example Embodiments)

Hereinafter, application examples of the information processing systems 100A to 100C will be described. In the information processing systems 100A to 100C, the output information OUT generated by the information processing systems 1A to 1C may be supplied to the management device 60, and the management device 60 may perform processing with reference to the output information OUT.

In such a configuration, the output information OUT may include an identifier of the reference image RI similar to the target image TI. The management device 60 can specify which medical image of which patient the target image TI is similar to with reference to the identifier. The management device 60 can specify what kind of medical care has been provided to a patient associated with the similar image RI (a patient whose similar image RI is captured).

Then, the management device 60 can estimate what kind of medical care may be provided in the future to the patient associated with the target image TI (the patient whose target image TI is captured) based on the result of the specific processing. The management device 60 can suitably execute order placement of a medicine, reservation of a hospital bed, reservation of an additional test, and the like that may be necessary based on the estimation result.

### [Implementation Example by Software]

Some or all of the functions of the information processing devices 1, 1A, 1B, and 1C (referred to below also as "each of the above devices") may be implemented by hardware such as an integrated circuit (IC chip) or may be implemented by software.

In the latter case, each of the above devices is implemented by, for example, a computer that executes commands of a program, that is software for implementing each function. An example of such a computer (hereinafter, referred to as a computer C) is illustrated in Fig. 14. Fig. 14 is a block diagram illustrating a hardware configuration of the computer C functioning as each of the above devices.

The computer C includes at least one processor C1 and at least one memory C2. A program P for causing the computer C to operate as each of the above devices is recorded in the memory C2. In the computer C, by the processor C1 reading the program P from the memory C2 and executing the program P, each function of each of the above devices is achieved.

Available examples of the processor C1 include a Central Processing Unit (CPU), a Graphic Processing Unit (GPU), a Digital Signal Processor (DSP), a Micro Processing Unit (MPU), a Floating point number Processing Unit (FPU), a Physics Processing Unit (PPU), a Tensor Processing Unit (TPU), a quantum processor, a microcontroller, or a combination thereof. Available examples of the memory C2 include a flash memory, a Hard Disk Drive (HDD), a Solid State Drive (SSD), or a combination thereof.

The computer C may further include a random access memory (RAM) for loading the program P at the time of execution and temporarily storing various types of data. The computer C may further include a communication interface for transmitting and receiving data to and from another device. The computer C may further include an input/output interface for connecting input/output devices such as a keyboard, a mouse, a display, and a printer.

The program P may be recorded in a non-transitory tangible recording medium M readable by the computer C. As such a recording medium M, for example, a tape, a disk, a card, a semiconductor memory, a programmable logic circuit, or the like can be used. The computer C can acquire the program P via such a recording medium M. The program P can be transmitted via a transmission medium. As such a transmission medium, for example, a communication network, a broadcast wave, or the like can be used. The computer C can also acquire the program P via such a transmission medium.

Each of the above functions of each of the above devices may be achieved by a single processor provided in a single computer, may be achieved in cooperation with a plurality of processors provided in a single computer, or may be achieved in cooperation with a plurality of processors provided in a plurality of computers. The program for causing each of the above devices to achieve each of the above functions may be stored in a single memory provided in a single computer, may be stored in a distributed manner in a plurality of memories provided in a single computer, or may be stored in a distributed manner in a plurality of memories provided in a plurality of computers.

While the present disclosure has been particularly shown and described with reference to example embodiments thereof, the present disclosure is not limited to these example embodiments. It will be understood by those of ordinary skill in the art that various changes in form and details may be made therein without departing from the spirit and scope of the present disclosure as defined by the claims. And each embodiment can be appropriately combined with other embodiments.

Each drawing is merely illustrative for describing one or more example embodiments. Each of the drawings is not associated with only one specific example embodiment, but may be associated with one or more other example embodiments. As those of ordinary skill in the art will appreciate, various features or steps described with reference to any one of the drawings may be combined with features or steps illustrated in one or more other drawings, for example, to create an example embodiment that is not explicitly illustrated nor described. All of the features or steps illustrated in any one of the drawings for describing example embodiments are not necessarily mandatory, and some features or steps may be omitted. The order of the steps described in any one of the drawings may be changed as appropriate.

### [Supplementary Information A]

The present disclosure includes techniques described in the following Supplementary Notes. However, the present disclosure is not limited to the techniques described in the following Supplementary Notes, and various modifications may be made within the scope described in the claims.

### (Supplementary Note A1)

An image retrieval device including:
an acquisition means for acquiring a target image and a text for specifying one or more objects in the target image;
a first calculation means for calculating a first feature with reference to the text;
   a second calculation means for calculating a second feature for each of the target image and a plurality of reference images with reference to the first feature; and
   a specification means for specifying a reference image similar to the target image with reference to a second feature of the target image and a second feature of each of the plurality of reference images.

### (Supplementary Note A2)

The image retrieval device according to Supplementary Note A1, in which
the first calculation means is configured to execute calculating the first feature by vectorizing the text in a feature space, and
the second calculation means is configured to execute:
   calculating an image feature of each of the target image and the plurality of reference images by vectorizing each of the target image and the plurality of reference images in the same feature space as the certain feature space; and
   calculating the second feature for each of the target image and the plurality of reference images by using similarity between the first feature and the image feature.

### (Supplementary Note A3)

The image retrieval device according to Supplementary Note A2, in which the second feature is a vector including a similarity between the first feature and the image feature as a component.

### (Supplementary Note A4)

The image retrieval device according to Supplementary Note A2 or A3, in which the specification means specifies a reference image similar to the target image with reference to similarity between a second feature of the target image and a second feature of each of the plurality of reference images.

### (Supplementary Note A5)

The image retrieval device according to any one of Supplementary Notes A1 to A4, including an output information generation means for generating output information including the reference image similar to the target image and reference information associated with the reference image.

### (Supplementary Note A6)

The image retrieval device according to Supplementary Note A5, in which the reference information includes information for assisting a medical practitioner in making a decision.

### (Supplementary Note A7)

The image retrieval device according to any one of Supplementary Notes A1 to A6, including:
a related image generation means for generating a related image in which a region related to the text is emphasized using a machine-learned model for at least one of the target image and a reference image similar to the target image; and
an output information generation means for generating output information including at least one of the target image and a reference image similar to the target image, and the related image.

### (Supplementary Note A8)

The image retrieval device according to Supplementary Note A7, in which the second calculation means is further configured to execute:
calculating a related feature from the related image related to each of the target image and the plurality of reference images, and
the specification means is configured to execute:
   specifying a reference image similar to the target image with reference to a second feature and a related feature of the target image and a second feature and a related feature of each of the plurality of reference images.

### [Supplementary Information B]

The present disclosure includes techniques described in the following Supplementary Notes. However, the present disclosure is not limited to the techniques described in the following Supplementary Notes, and various modifications may be made within the scope described in the claims.

### (Supplementary Note B1)

An image retrieval method including:
an acquisition process of acquiring, by at least one processor, a target image and a text for specifying one or more objects in the target image;
a first calculation process of calculating, by the at least one processor, a first feature with reference to the text;
a second calculation process of calculating, by the at least one processor, a second feature for each of the target image and a plurality of reference images with reference to the first feature; and
a specification process of specifying, by the at least one processor, a reference image similar to the target image with reference to a second feature of the target image and a second feature of each of the plurality of reference images.

### (Supplementary Note B2)

The image retrieval method according to Supplementary Note B1, in which
in the first calculation process, the at least one processor calculates the first feature by vectorizing the text in a feature space, and
in the second calculation process, the at least one processor performs:
   calculating an image feature of each of the target image and the plurality of reference images by vectorizing each of the target image and the plurality of reference images in the same feature space as the certain feature space; and
   calculating the second feature for each of the target image and the plurality of reference images by using similarity between the first feature and the image feature.

### (Supplementary Note B3)

The image retrieval method according to Supplementary Note B2, in which the second feature is a vector including a similarity between the first feature and the image feature as a component.

### (Supplementary Note B4)

The image retrieval method according to Supplementary Note B2 or B3, in which, in the specification process, the at least one processor specifies a reference image similar to the target image with reference to similarity between a second feature of the target image and a second feature of each of the plurality of reference images.

### (Supplementary Note B5)

The image retrieval method according to any one of Supplementary Notes B1 to B4, in which the at least one processor includes an output information generation process of generating output information including the reference image similar to the target image and reference information associated with the reference image.

### (Supplementary Note B6)

The image retrieval method according to Supplementary Note B5, in which the reference information includes information for assisting a medical practitioner in making a decision.

### (Supplementary Note B7)

The image retrieval method according to any one of Supplementary Notes B1 to B6, including:
a related image generation process of generating, by the at least one processor, a related image in which a region related to the text is emphasized using a machine-learned model for at least one of the target image and a reference image similar to the target image; and
an output information generation process of generating, by the at least one processor, output information including at least one of the target image and a reference image similar to the target image, and the related image.

### (Supplementary Note B8)

The image retrieval method according to Supplementary Note B7, in which
in the second calculation process, the at least one processor is further configured to execute:
calculating a related feature from the related image related to each of the target image and the plurality of reference images, and
in the specification process, the at least one processor is configured to execute:
   specifying a reference image similar to the target image with reference to a second feature and a related feature of the target image and a second feature and a related feature of each of the plurality of reference images.

### [Supplementary Information C]

The present disclosure includes techniques described in the following Supplementary Notes. However, the present disclosure is not limited to the techniques described in the following Supplementary Notes, and various modifications may be made within the scope described in the claims.

### (Supplementary Note C1)

An image retrieval program for causing a computer to function as an image retrieval device, in which the program causes the computer to function as:
an acquisition means for acquiring a target image and a text for specifying one or more objects in the target image;
a first calculation means for calculating a first feature with reference to the text;
   a second calculation means for calculating a second feature for each of the target image and a plurality of reference images with reference to the first feature; and
   a specification means for specifying a reference image similar to the target image with reference to a second feature of the target image and a second feature of each of the plurality of reference images.

### (Supplementary Note C2)

The image retrieval program according to Supplementary Note C1, in which
the first calculation means is configured to execute calculating the first feature by vectorizing the text in a feature space, and
the second calculation means is configured to execute:
   calculating an image feature of each of the target image and the plurality of reference images by vectorizing each of the target image and the plurality of reference images in the same feature space as the certain feature space; and
   calculating the second feature for each of the target image and the plurality of reference images by using similarity between the first feature and the image feature.

### (Supplementary Note C3)

The image retrieval program according to Supplementary Note C2, in which the second feature is a vector including a similarity between the first feature and the image feature as a component.

### (Supplementary Note C4)

The program according to Supplementary Note C2 or C3, in which the specification means specifies a reference image similar to the target image with reference to similarity between a second feature of the target image and a second feature of each of the plurality of reference images.

### (Supplementary Note C5)

The program according to any one of Supplementary Notes C1 to C4, in which the program causes the computer to function further as an output information generation means for generating output information including the reference image similar to the target image and reference information associated with the reference image.

### (Supplementary Note C6)

The program according to Supplementary Note C5, in which the reference information includes information for assisting a medical practitioner in making a decision.

### (Supplementary Note C7)

The image retrieval program according to any one of Supplementary Notes C1 to C6, in which the program causes the computer to function further as:
a related image generation means for generating a related image in which a region related to the text is emphasized using a machine-learned model for at least one of the target image and a reference image similar to the target image; and
an output information generation process of generating output information including at least one of the target image and a reference image similar to the target image, and the related image.

### (Supplementary Note C8)

The image retrieval program according to Supplementary Note C7, in which
the second calculation means is further configured to execute:
calculating a related feature from the related image related to each of the target image and the plurality of reference images, and
the specification means is configured to execute:
   specifying a reference image similar to the target image with reference to a second feature and a related feature of the target image and a second feature and a related feature of each of the plurality of reference images.

### [Supplementary Information D]

The present disclosure includes techniques described in the following Supplementary Notes. However, the present disclosure is not limited to the techniques described in the following Supplementary Notes, and various modifications may be made within the scope described in the claims.

### (Supplementary Note D1)

An image retrieval device including: at least one processor,
in which the at least one processor executes:
an acquisition process of acquiring a target image and a text for specifying one or more objects in the target image;
a first calculation process of calculating a first feature with reference to the text;
a second calculation process of calculating a second feature for each of the target image and a plurality of reference images with reference to the first feature; and
a specification process of specifying a reference image similar to the target image with reference to a second feature of the target image and a second feature of each of the plurality of reference images.

The image retrieval device may further include a memory. The memory may store a program for causing the at least one processor to execute each type of the processing.

### (Supplementary Note D2)

The image retrieval device according to Supplementary Note D1, in which
in the first calculation process, the at least one processor calculates the first feature by vectorizing the text in a feature space, and
in the second calculation process, the at least one processor performs:
   calculating an image feature of each of the target image and the plurality of reference images by vectorizing each of the target image and the plurality of reference images in the same feature space as the certain feature space; and
   calculating the second feature for each of the target image and the plurality of reference images by using similarity between the first feature and the image feature.

### (Supplementary Note D3)

The image retrieval device according to Supplementary Note D2, in which the second feature is a vector including a similarity between the first feature and the image feature as a component.

### (Supplementary Note D4)

The image retrieval device according to Supplementary Note D2 or D3, in which, in the specification process, the at least one processor specifies a reference image similar to the target image with reference to similarity between a second feature of the target image and a second feature of each of the plurality of reference images.

### (Supplementary Note D5)

The image retrieval device according to any one of Supplementary Notes D1 to D4, in which the at least one processor further executes an output information generation process of generating output information including the reference image similar to the target image and reference information associated with the reference image.

### (Supplementary Note D6)

The image retrieval device according to Supplementary Note D5, in which the reference information includes information for assisting a medical practitioner in making a decision.

### (Supplementary Note D7)

The image retrieval device according to any one of Supplementary Notes D1 to D6, in which the at least one processor further executes:
a related image generation process of generating a related image in which a region related to the text is emphasized using a machine-learned model for at least one of the target image and a reference image similar to the target image; and
an output information generation process of generating output information including at least one of the target image and a reference image similar to the target image, and the related image.

### (Supplementary Note D8)

The image retrieval device according to Supplementary Note D7, in which
in the second calculation process, the at least one processor is further configured to execute:
calculating a related feature from the related image related to each of the target image and the plurality of reference images, and
in the specification process, the at least one processor is configured to execute:
   specifying a reference image similar to the target image with reference to a second feature and a related feature of the target image and a second feature and a related feature of each of the plurality of reference images.

### [Supplementary Information E]

The present disclosure includes techniques described in the following Supplementary Notes. However, the present disclosure is not limited to the techniques described in the following Supplementary Notes, and various modifications may be made within the scope described in the claims.

### (Supplementary Note E1)

A non-transitory recording medium having recorded therein an image retrieval program for causing a computer to function as an image retrieval device, in which the program causes the computer to execute:
an acquisition process of acquiring a target image and a text for specifying one or more objects in the target image;
a first calculation process of calculating a first feature with reference to the text;
a second calculation process of calculating a second feature for each of the target image and a plurality of reference images with reference to the first feature; and
a specification process of specifying a reference image similar to the target image with reference to a second feature of the target image and a second feature of each of the plurality of reference images.

Some or all of the elements (for example, configurations and functions) described in Supplementary Notes A2 to A8 dependent on Supplementary Note A1 can also be dependent on Supplementary Notes B1, C1, D1, and E1 by the same dependency relationship as Supplementary Notes A2 to A8. Some or all of the elements described in any Supplementary Note may be applied to various types of hardware, software, recording means for recording software, systems, and methods.

## Claims

1. An image retrieval device comprising:
an acquisition means for acquiring a target image and a text for specifying one or more objects in the target image;
a first calculation means for calculating a first feature with reference to the text;
a second calculation means for calculating a second feature for each of the target image and a plurality of reference images with reference to the first feature; and
a specification means for specifying a reference image similar to the target image with reference to a second feature of the target image and a second feature of each of the plurality of reference images.

2. The image retrieval device according to claim 1, wherein
the first calculation means calculates the first feature by vectorizing the text in a feature space, and
the second calculation means calculates an image feature of each of the target image and the plurality of reference images by vectorizing each of the target image and the plurality of reference images in the same feature space as the certain feature space, and
calculates the second feature for each of the target image and the plurality of reference images by using similarity between the first feature and the image feature.

3. The image retrieval device according to claim 2, wherein the second feature is a vector including a similarity between the first feature and the image feature as a component.

4. The image retrieval device according to claim 3, wherein the specification means specifies a reference image similar to the target image with reference to similarity between a second feature of the target image and a second feature of each of the plurality of reference images.

5. The image retrieval device according to any one of claims 1 to 4, comprising an output information generation means for generating output information including the reference image similar to the target image and reference information associated with the reference image.

6. The image retrieval device according to claim 5, wherein the reference information includes information for assisting a medical practitioner in making a decision.

7. The image retrieval device according to any one of claims 1 to 4, comprising:
a related image generation means for generating a related image in which a region related to the text is emphasized using a machine-learned model for at least one of the target image and a reference image similar to the target image; and
an output information generation means for generating output information including at least one of the target image and a reference image similar to the target image, and the related image.

8. The image retrieval device according to claim 7, wherein
the second calculation means calculates a related feature from the related image related to each of the target image and the plurality of reference images, and
the specification means specifies a reference image similar to the target image with reference to a second feature and a related feature of the target image and a second feature and a related feature of each of the plurality of reference images.

9. An image retrieval method performed by one or more processors configured to:
acquire a target image and a text for specifying one or more objects in the target image;
calculate a first feature with reference to the text;
calculate a second feature for each of the target image and a plurality of reference images with reference to the first feature; and
specify a reference image similar to the target image with reference to a second feature of the target image and a second feature of each of the plurality of reference images.

10. The image retrieval method according to claim 9, wherein
in the calculating of the first feature, the first feature is calculated by vectorizing the text in a certain feature space,
in the calculating of the second feature,
an image feature of each of the target image and the plurality of reference images is calculated by vectorizing each of the target image and the plurality of reference images in a feature space same as the certain feature space, and
the second feature for each of the target image and the plurality of reference images is calculated by using similarity between the first feature and the image feature.

11. The image retrieval method according to claim 10, wherein the second feature is a vector including a similarity between the first feature and the image feature as a component.

12. The image retrieval method according to claim 11, wherein the specifying includes specifying a reference image similar to the target image with reference to similarity between a second feature of the target image and a second feature of each of the plurality of reference images.

13. The image retrieval method according to any one of claims 9 to 12, wherein the one or more processors are configured to generate output information including the reference image similar to the target image and reference information associated with the reference image.

14. The image retrieval method according to claim 13, wherein the reference information includes information for assisting a medical practitioner in making a decision.

15. A program for causing a computer to execute the image method according to any of claims 9 to 14.
